# EUROPEAN PATENT APPLICATION

(11) **EP 3 373 142 A1**
(43) Date of publication of application: **12.09.2018**
(21) Application number: 18157134.0
(22) Date of filing: 16.02.2018
(51) Int. Cl.: G06F 9/54

(54) **SYSTEMS AND METHODS FOR REAL TIME MESSAGE PROCESSING USING AN EVENT DRIVEN FRAMEWORK**

(30) Priority: 09.03.2017 US 201762469173 P; 04.08.2017 US 201715669600
(71) Applicant: Capital One Services, LLC, McLean, Virginia 22102 (US)
(72) Inventor: Bhatt, Japan, Plano, TX Texas 75025 (US); Navarifar, Maten Mathew, Allen, TX Texas 75013 (US); Pandya, Asutosh, Irving, TX Texas 75063 (US); Balasubramanian, Bhuvaneswari, Frisco, TX Texas 75034 (US); Pasam, Vijaya Kumar, Frisco, TX Texas 75035 (US); Zagumny, Yvonne, Lewisville, TX Texas 75056 (US)
(74) Representative: Thoma, Michael

(57) **Abstract**

A system includes one or more memory devices storing instructions, and one or more processors configured to execute the instructions to perform steps of a method for providing real time message processing using an event driven framework. The system may generate an event associated with a particular topic by a producer component and place the event into an event queue associated with the topic that is maintained by a broker device. A consumer component associated with the topic may then process the event and execute a predetermined consumer action. The system may then select a communication medium used to transmit a notification to the customer based on customer behavior information.

## Description

### CROSS-REFERENCE TO RELATED APPLICATION

This application claims the benefit of U.S. Provisional Application No. 62/469,173, filed 9 March 2017 and U.S. Non-Provisional Application No. 15/669,600 filed 4 August 2017, the entire contents and substance of which are hereby incorporated by reference.

### FIELD OF INVENTION

The present disclosure relates to systems and methods for providing real time message processing using an event driven framework, and more particularly providing systems and methods to utilize real time message processing to issue communications to customers in response to events as they happen.

### BACKGROUND

It is commonplace for businesses and organizations to send mass communications to large groups of their customers or affiliates, both on a scheduled basis and in response to real-time events. While the general substance of the mass communications is similar between customers, personalizing each communication to a particular customer (e.g., with that customer's details) can be challenging, particularly as the number of customers grows. To address this challenge, many mass communications systems rely on batch processing, wherein various related tasks are grouped together for serial execution at, for example, the end of the day. Batch processing may provide some efficiency in that similar tasks may be serially processed and executed by a component configured to handle that particular process, however it presents certain inefficiencies in that there is a time delay associated with executing these processes. Similarly, contemporary communication systems may also use batch processing to handle certain other transactions such as requests from customers to make changes to an account, or the processing of credit card transactions. From the customer service perspective, it would be desirable to process such requests and transactions immediately upon receipt or occurrence, so that the customer receives immediate feedback. Therefore, it is desirable to provide a system that may replace the batch processing with real-time processing of such events without incurring the inefficiencies of prior art real-time processing methods.

Accordingly, there is a need for improved systems and methods to provide real time message processing using an event driven framework that allows for the immediate processing of events. Embodiments of the present disclosure are directed to this and other considerations.

### SUMMARY

Disclosed embodiments provide systems and methods for providing real time message processing using an event driven framework.

Consistent with the disclosed embodiments, the system may include one or more memory devices storing instructions, and one or more processors configured to execute the instructions to perform steps of a method to provide real time message processing using an event driven framework. The system may execute the instructions to generate a first event by a first producer component, where the first event is associated with a first topic. The system may then transmit the first event from the producer component to a broker device that maintains a plurality of event queues that are each capable of temporarily storing a plurality of events. The broker device may then place the first event in a first event queue that is associated with the first topic. A first consumer component associated with the first topic may detect that the first event is in the event queue and then process the first event by executing a first predetermined consumer action. The system may receive customer behavior information. The first consumer component may generate a notification based on the processed first event and select one or more communication mediums based on the customer behavior information. The system may then transmit the notification via the selected one or more communication mediums.

Consistent with the disclosed embodiments, methods for providing real time message processing using an event driven framework are also disclosed.

Further features of the disclosed design, and the advantages offered thereby, are explained in greater detail hereinafter with reference to specific embodiments illustrated in the accompanying drawings, wherein like elements are indicated be like reference designators.

### BRIEF DESCRIPTION OF THE DRAWINGS

Reference will now be made to the accompanying drawings, which are not necessarily drawn to scale, and which are incorporated into and constitute a portion of this disclosure, illustrate various implementations and aspects of the disclosed technology and, together with the description, serve to explain the principles of the disclosed technology. In the drawings:
FIG. 1 is a diagram of an exemplary system that may be used to provide real time message processing using an event driven framework;
FIG. 2 is a component diagram of an exemplary producer device;
FIG. 3 is a component diagram of an exemplary broker device;
FIG. 4 is a component diagram of an exemplary consumer device; and
FIG. 5 is a flowchart of an exemplary system for providing real time message processing using an event driven framework.

### DETAILED DESCRIPTION

Some implementations of the disclosed technology will be described more fully with reference to the accompanying drawings. This disclosed technology may, however, be embodied in many different forms and should not be construed as limited to the implementations set forth herein. The components described hereinafter as making up various elements of the disclosed technology are intended to be illustrative and not restrictive. Many suitable components that would perform the same or similar functions as components described herein are intended to be embraced within the scope of the disclosed electronic devices and methods. Such other components not described herein may include, but are not limited to, for example, components developed after development of the disclosed technology.

It is also to be understood that the mention of one or more method steps does not preclude the presence of additional method steps or intervening method steps between those steps expressly identified. Similarly, it is also to be understood that the mention of one or more components in a device or system does not preclude the presence of additional components or intervening components between those components expressly identified.

The disclosed embodiments are directed to systems and methods for providing real time message processing using an event driven framework. The system may include one or more memory devices storing instructions, and one or more processors configured to execute the instructions to perform steps of a method. Specifically, in some embodiments, the system may provide real time message processing to issue communications to customers in response to events as they happen. The system may execute the instructions to generate a first event (e.g., electronic data representing an event or a request) by a first producer component (e.g., an API), where the first event is associated with a first topic (e.g., cancelation of automatic payments). The system may then transmit the first event from the producer component to a broker device that maintains a plurality of event queues that are each capable of temporarily storing a plurality of events. The broker device may then place the first event in a first event queue that is associated with the first topic. A first consumer component (e.g., a specialized software program) associated with the first topic may detect that the first event is in the event queue and then process the first event by executing a first predetermined consumer action (e.g., cancel automatic payments associated with a particular user account). The system may receive customer behavior information (e.g., how often a user checks email, whether they open emails from a particular source, etc.). The first consumer component may generate a notification based on the processed first event and select one or more communication mediums (e.g., an email, a SMS message, a letter) based on the customer behavior information. The system may then transmit the notification via the selected one or more communication mediums.

In another embodiment, a method for providing real time message processing may include generating a first event by a first producer component, where the first event is associated with a first topic. The method may include transmitting the first event from the producer component to a broker device that maintains a plurality of event queues that are each capable of temporarily storing a plurality of events. The method may include placing, by the broker device, the first event in a first event queue that is associated with the first topic. The method may include detecting, the that the first event is in the event queue by a first consumer component associated with the first topic and processing the first event by executing a first predetermined consumer action. The method may include receiving customer behavior information. The method may further include generating a notification by the first consumer component based on the processed first event and selecting one or more communication mediums based on the customer behavior information. The method may further include transmitting the notification via the selected one or more communication mediums.

In another embodiment a non-transitory computer-readable medium storing instructions that, when executed by one or more processors, cause a system to generate a first event by a first producer component, where the first event is associated with a first topic. The system may then transmit the first event from the producer component to a broker device that maintains a plurality of event queues that are each capable of temporarily storing a plurality of events. The broker device may then place the first event in a first event queue that is associated with the first topic. A first consumer component associated with the first topic may detect that the first event is in the event queue and then process the first event by executing a first predetermined consumer action. The system may receive customer behavior information. The first consumer component may generate a notification based on the processed first event and select one or more communication mediums based on the customer behavior information. The system may then transmit the notification via the selected one or more communication mediums.

Although the above embodiments are described with respect to systems, it is contemplated that embodiments with identical or substantially similar features may alternatively be implemented as methods and/or non-transitory computer-readable media.

Reference will now be made in detail to exemplary embodiments of the disclosed technology, examples of which are illustrated in the accompanying drawings and disclosed herein. Wherever convenient, the same references numbers will be used throughout the drawings to refer to the same or like parts.

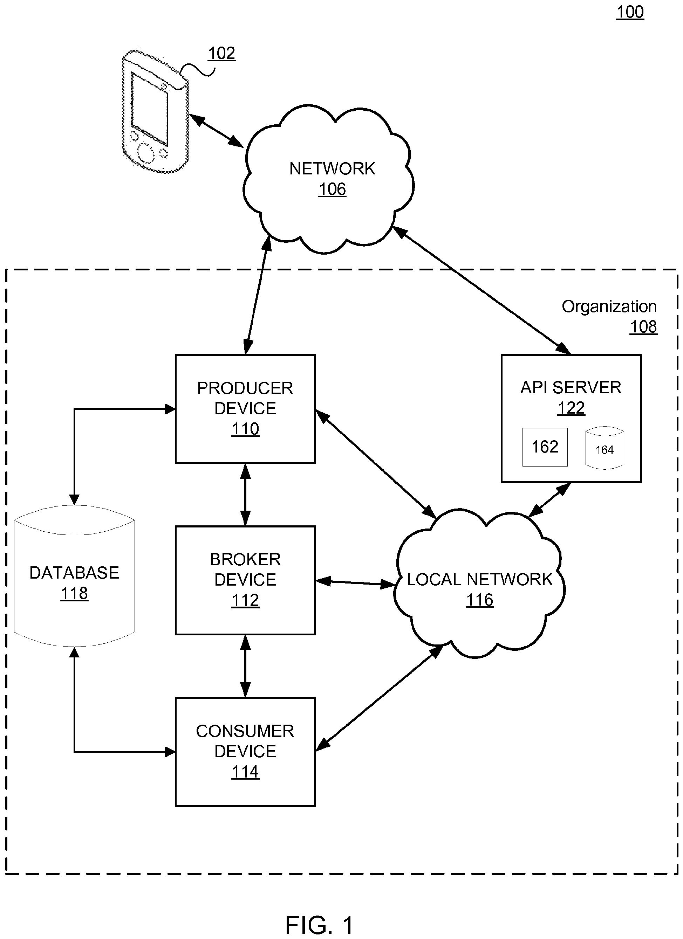

FIG. 1 is a diagram of an exemplary system 100 that may be configured to perform one or more processes that may provide real time message processing using an event driven framework. The components and arrangements shown in FIG. 1 are not intended to limit the disclosed embodiments as the components used to implement the disclosed processes and features may vary. As shown, system 100 may include a user device 102, a network 106, and an organization 108 including, for example, a producer device 110, a broker device 112, a consumer device 114, a local network 116, a database 118 and an API server 122.

In some embodiments, a customer may operate user device 102. User device 102 can include one or more of a mobile device, smart phone, general purpose computer, tablet computer, laptop computer, telephone, PSTN landline, smart wearable device, voice command device, other mobile computing device, or any other device capable of communicating with network 106 and ultimately communicating with one or more components of organization 108. In some embodiments, a user device may include or incorporate electronic communication devices for hearing or vision impaired users. User device 102 may belong to or be provided by a customer, or may be borrowed, rented, or shared. Customers may include individuals such as, for example, subscribers, clients, prospective clients, or customers of an entity associated with organization 108, such as individuals who have obtained, will obtain, or may obtain a product, service, or consultation from an entity associated with organization 108. According to some embodiments, user device 102 may include an environmental sensor for obtaining audio or visual data, such as a microphone and/or digital camera, a geographic location sensor for determining the location of the device, an input/output device such as a transceiver for sending and receiving data, a display for displaying digital images, one or more processors including a sentiment depiction processor, and a memory in communication with the one or more processors.

Network 106 may be of any suitable type, including individual connections via the internet such as cellular or WiFi networks. In some embodiments, network 106 may connect terminals, services, and mobile devices using direct connections such as radio-frequency identification (RFID), near-field communication (NFC), Bluetooth™, low-energy Bluetooth™ (BLE), WiFi™, ZigBee™, ambient backscatter communications (ABC) protocols, USB, WAN, or LAN. Because the information transmitted may be personal or confidential, security concerns may dictate one or more of these types of connections be encrypted or otherwise secured. In some embodiments, however, the information being transmitted may be less personal, and therefore the network connections may be selected for convenience over security.

Network 106 may comprise any type of computer networking arrangement used to exchange data. For example, network 106 may be the Internet, a private data network, virtual private network using a public network, and/or other suitable connection(s) that enables components in system environment 100 to send and receive information between the components of system 100. Network 106 may also include a public switched telephone network ("PSTN") and/or a wireless network.

Organization 108 may be associated with an entity such as a business, corporation, individual, partnership, or any other entity that provides one or more of goods, services, and consultations to individuals such as customers.

Organization 108 may include one or more servers, devices, and computer systems for performing one or more functions associated with products and/or services that organization 108 provides. Such servers, devices, and computer systems may include, for example, producer device 110, broker device 112, consumer device 114, and API server 1122, as well as any other computer systems necessary to accomplish tasks associated with organization 108 or the needs of customers.

Producer device 110 may include a computer system configured to generate events to be placed in an event queue for further processing. As described in further detail below, a producer device may include one or more producer components that are configured to create events. Information stored in producer device 110 may be accessed (e.g., retrieved, updated, and added to) via local network 116 and/or network 106 by one or more devices (e.g., broker device 110) of system 100.

Broker device 112 may include a computer system configured to receive events from producer device 110 (or from one or more producer components) and store the event in an appropriate event queue. Information stored in broker device 112 may be accessed (e.g., retrieved, updated, and added to) via local network 116 and/or network 106 by one or more devices (e.g., consumer device 114) of system 100.

Consumer device 114 may include a computer system configured to monitor event queues of broker device 112, fetch and/or receive events from consumer device 114, process the events, and execute some predetermined consumer action. As described in further detail below, in some embodiments, consumer device 114 may include one or more consumer components that may perform these functions. Further, in some embodiments, consumer device may receive customer behavior information and select one or more communication mediums for transmitting a notification to, for example, user device 102. Information stored in consumer device 114 may be accessed (e.g., retrieved, updated, and added to) via local network 116 and/or network 106 by one or more devices (e.g., API server 122) of system 100.

Local network 116 may comprise any type of computer networking arrangement used to exchange data in a localized area, such as WiFi, Bluetooth™ Ethernet, and other suitable network connections that enable components of organization 108 to interact with one another and to connect to network 106 for interacting with components in system environment 100. In some embodiments, local network 116 may comprise an interface for communicating with or linking to network 106. In other embodiments, components of organization 208 may communicate via network 106, without a separate local network 116.

According to some embodiments, database 118 may be a database associated with organization 108 that stores a variety of information relating to customers, transactions, and business operations. Database 118 may also serve as a back-up storage device and may contain data and information that is also stored on, for example, local databases associated with producer device 110, broker device 112, consumer device 114, and API server 122. Database 118 may be accessed by producer device 110 and consumer device 114 and may be used to information relating to events executed by the system 100 and customer behavior information.

API server 122 may include a computer system configured to execute one or more application program interfaces (APIs) that provide various functionalities related to the operations of an entity associated with organization 108. In some embodiments, API server 122 may include one or more API adapters that enable the API server 122 to interface with and utilize enterprise APIs maintained by organization 108 that may be housed on other systems or devices. In some embodiments, APIs can provide functions that include, for example, retrieving customer account information, modifying customer account information, executing a transaction related to an account, scheduling a payment, authenticating a customer, updating a customer account to opt-in or opt-out of notifications, generating communications to customers such as text messages, emails, or letters, and any other such function related to management of customer profiles and accounts. API server 122 may have one or more processors 162 and one or more API databases 164, which may be any suitable repository of API data. Information stored in API server 122 may be accessed (e.g., retrieved, updated, and added to) via local network 116 and/or network 106 by one or more devices (e.g., consumer device 114) of system 100. In some embodiments, API processor 162 may be used to implement one or more APIs that can access, modify, and retrieve customer account information and generate and transmit communications to a user device 102.

In certain embodiments, real-time APIs consistent with certain disclosed embodiments may use Representational State Transfer (REST) style architecture, and in this scenario, the real time API may be called a RESTful API.

In certain embodiments, a real-time API may include a set of Hypertext Transfer Protocol (HTTP) request messages and a definition of the structure of response messages. In certain aspects, the API may allow a software application, which is written against the API and installed on a client (such as, for example, transaction server 114) to exchange data with a server that implements the API (such, for example API server 122), in a request-response pattern. In certain embodiments, the request-response pattern defined by the API may be configured in a synchronous fashion, and require that the response be provided in real-time. In some embodiments, a response message from the server to the client through the API consistent with the disclosed embodiments may be in the format including, for example, Extensible Markup Language (XML), JavaScript Object Notation (JSON), and/or the like.

In some embodiments, the API design may also designate specific request methods for a client to access the server. For example, the client may send GET and POST requests with parameters URL-encoded (GET) in the query string or form-encoded (POST) in the body (e.g., a form submission). Additionally or alternatively, the client may send GET and POST requests with JSON serialized parameters in the body. Preferably, the requests with JSON serialized parameters use "application/j son" content-type. In another aspect, an API design may also require the server implementing the API return messages in JSON format in response to the request calls from the client.

Although the preceding description describes various functions of producer device 110, broker device 112, consumer device 114, database 118, and API server 122, in some embodiments, some or all of these functions may be carried out by a single computing device.

For ease of discussion, embodiments may be described in connection with the provision of real time message processing in the context of responding to an event related to a customer or a customer account. It is to be understood, however, that disclosed embodiments are not limited to use with management customer-related events and may be used in many other contexts. Further, steps or processes disclosed herein are not limited to being performed in the order described, but may be performed in any order, and some steps may be omitted, consistent with the disclosed embodiments.

The features and other aspects and principles of the disclosed embodiments may be implemented in various environments. Such environments and related applications may be specifically constructed for performing the various processes and operations of the disclosed embodiments or they may include a general purpose computer or computing platform selectively activated or reconfigured by program code to provide the necessary functionality. Further, the processes disclosed herein may be implemented by a suitable combination of hardware, software, and/or firmware. For example, the disclosed embodiments may implement general purpose machines configured to execute software programs that perform processes consistent with the disclosed embodiments. Alternatively, the disclosed embodiments may implement a specialized apparatus or system configured to execute software programs that perform processes consistent with the disclosed embodiments. Furthermore, although some disclosed embodiments may be implemented by general purpose machines as computer processing instructions, all or a portion of the functionality of the disclosed embodiments may be implemented instead in dedicated electronics hardware.

The disclosed embodiments also relate to tangible and non-transitory computer readable media that include program instructions or program code that, when executed by one or more processors, perform one or more computer-implemented operations. The program instructions or program code may include specially designed and constructed instructions or code, and/or instructions and code well-known and available to those having ordinary skill in the computer software arts. For example, the disclosed embodiments may execute high level and/or low level software instructions, such as machine code (e.g., such as that produced by a compiler) and/or high level code that can be executed by a processor using an interpreter.

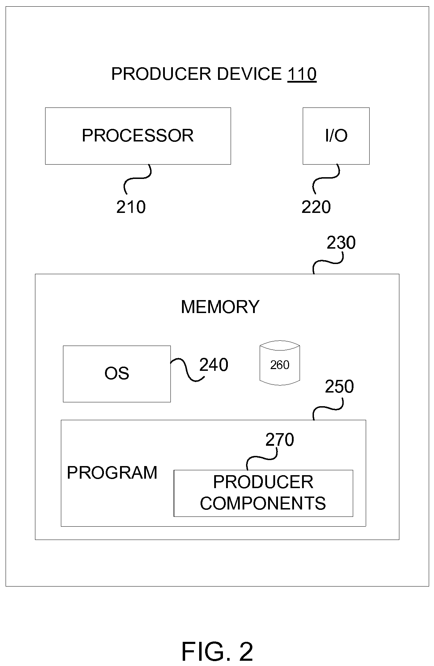

An exemplary embodiment of producer device 110 is shown in more detail in FIG. 2. Broker device 112, consumer device 114, and API server 122 may have a similar structure and may include many components that are similar to or even have the same capabilities as those described with respect to sentiment producer device 110. As shown, producer device 110 may include a processor 210, an input/output ("I/O") device 220, a memory 230 containing an operating system ("OS") 240 and a program 250. For example, producer device 110 may be a single device or server or may be configured as a distributed computer system including multiple servers, devices, or computers that interoperate to perform one or more of the processes and functionalities associated with the disclosed embodiments. In some embodiments, the producer device 110 may further include a peripheral interface, a transceiver, a mobile network interface in communication with the processor 210, a bus configured to facilitate communication between the various components of the prouder device 110, and a power source configured to power one or more components of the producer device 110.

A peripheral interface may include the hardware, firmware and/or software that enables communication with various peripheral devices, such as media drives (e.g., magnetic disk, solid state, or optical disk drives), other processing devices, or any other input source used in connection with the instant techniques. In some embodiments, a peripheral interface may include a serial port, a parallel port, a general purpose input and output (GPIO) port, a game port, a universal serial bus (USB), a micro-USB port, a high definition multimedia (HDMI) port, a video port, an audio port, a Bluetooth™ port, a near-field communication (NFC) port, another like communication interface, or any combination thereof.

In some embodiments, a transceiver may be configured to communicate with compatible devices and ID tags when they are within a predetermined range. A transceiver may be compatible with one or more of: radio-frequency identification (RFID), near-field communication (NFC), Bluetooth™, low-energy Bluetooth™ (BLE), WiFi™, ZigBee™, ambient backscatter communications (ABC) protocols or similar technologies.

A mobile network interface may provide access to a cellular network, the Internet, a local area network, or another wide-area network. In some embodiments, a mobile network interface may include hardware, firmware, and/or software that allows the processor(s) 210 to communicate with other devices via wired or wireless networks, whether local or wide area, private or public, as known in the art. A power source may be configured to provide an appropriate alternating current (AC) or direct current (DC) to power components.

Processor 210 may include one or more of a microprocessor, microcontroller, digital signal processor, co-processor or the like or combinations thereof capable of executing stored instructions and operating upon stored data. Memory 230 may include, in some implementations, one or more suitable types of memory (e.g. such as volatile or non-volatile memory, random access memory (RAM), read only memory (ROM), programmable read-only memory (PROM), erasable programmable read-only memory (EPROM), electrically erasable programmable read-only memory (EEPROM), magnetic disks, optical disks, floppy disks, hard disks, removable cartridges, flash memory, a redundant array of independent disks (RAID), and the like), for storing files including an operating system, application programs (including, for example, a web browser application, a widget or gadget engine, and or other applications, as necessary), executable instructions and data. In one embodiment, the processing techniques described herein are implemented as a combination of executable instructions and data within the memory 230.

Processor 210 may be one or more known processing devices, such as a microprocessor from the Pentium™ family manufactured by Intel™ or the Turion™ family manufactured by AMD™. Processor 210 may constitute a single core or multiple core processor that executes parallel processes simultaneously. For example, processor 210 may be a single core processor that is configured with virtual processing technologies. In certain embodiments, processor 210 may use logical processors to simultaneously execute and control multiple processes. Processor 210 may implement virtual machine technologies, or other similar known technologies to provide the ability to execute, control, run, manipulate, store, etc. multiple software processes, applications, programs, etc. One of ordinary skill in the art would understand that other types of processor arrangements could be implemented that provide for the capabilities disclosed herein.

Producer device 110 may include one or more storage devices configured to store information used by processor 210 (or other components) to perform certain functions related to the disclosed embodiments. In one example producer device 110 may include memory 230 that includes instructions to enable processor 210 to execute one or more applications, such as server applications, network communication processes, and any other type of application or software known to be available on computer systems. Alternatively, the instructions, application programs, etc. may be stored in an external storage or available from a memory over a network. The one or more storage devices may be a volatile or non-volatile, magnetic, semiconductor, tape, optical, removable, non-removable, or other type of storage device or tangible computer-readable medium.

In one embodiment, producer device 110 may include memory 230 that includes instructions that, when executed by processor 210, perform one or more processes consistent with the functionalities disclosed herein. Methods, systems, and articles of manufacture consistent with disclosed embodiments are not limited to separate programs or computers configured to perform dedicated tasks. For example, producer device 120 may include memory 230 that may include one or more programs 250 to perform one or more functions of the disclosed embodiments. Moreover, processor 210 may execute one or more programs 250 located remotely from system 100. For example, system 100 may access one or more remote programs 250, that, when executed, perform functions related to disclosed embodiments. In some embodiments, producer device 110 may include one or more producer components 270 that may create events. In some embodiments, an event may be electronic data that represents an event, request, or a piece of information. According to some embodiments, producer component 270 may include an API that interacts with one or more other computer systems to generate an event. For example, producer component 270 may include an API that generates an event in response to some customer input, such as receiving a customer request to cancel automatic bill payment. In this case, for example, the API of the producer component 270 may generate an event representing the customer's request to cancel automatic bill payment. In some embodiments, a producer component 270 may execute a batching process that may generates plurality of events at a predetermined date and/time. For example, a producer component 270 associated with bill reminders might perform a batching process by accessing a database of the system 100 (e.g., database 118) to determine every customer account that has a bill due in seven days. In some embodiments, a producer component 270 may perform such batching process on a predetermined timeframe, such as for example, at 9:00 AM on a daily basis. According to some embodiments, after the producer component 270 has created a batch of relevant accounts, producer component 270 may then create a plurality of events from the batch by, for example, creating a "bill reminder" event for each particular account of the batch.

In some embodiments, when producer component 270 generates an event, it may associate the event with an appropriate topic. According to some embodiments, a topic may be a classification intended to enable similar events to be grouped together. Similar events may be events that require execution of the same predetermined consumer action, such as, for example, a consumer action to "retrieve customer account balance." According to some embodiments, topics may include, for example, email consumer in relation to creating, modifying, or deleting a one-time payment, set up recurring payment, cancel recurring payment, send paper letter, initiate paperless notifications, mobile push notification, error handling, payment due reminder, payment processing, authenticate user, cancel automatic bill payment, retrieve account information, pay bill, transfer funds to an account, or any other such topic related to the management of customer accounts.

In some embodiments, events may represent non-critical tasks that may be asynchronously processed and executed offline by a consumer device 114. For example, a customer may utilize a mobile application on user 102 that may utilize an API (e.g., via API server 122) to initiate a payment on an account, and the API may execute certain critical real-time functions in association with the initiated payment such as executing the payment or adjusting the account balance, while other non-critical functions, such as for example, sending an email confirmation of the payment or recording an agent note describing the details of the transaction, may not need to be executed immediately, but may be executed after a short delay. In some embodiments, producer component 270 may create events associated with such non-critical functions, so that these non-critical functions may be separately asynchronously executed by the system 100 (e.g., via consumer device 114) when the resources to do so become available. Accordingly, the system 100 may enable critical functions to be executed immediately (e.g., via an API) while non-critical functions may be executed in a timeframe dependent on the amount of event traffic in the event queues. In this way, the system 100 may enable resources to be allocated appropriately to execute critical functions immediately and non-critical functions shortly thereafter.

Memory 230 may include one or more memory devices that store data and instructions used to perform one or more features of the disclosed embodiments. Memory 230 may also include any combination of one or more databases controlled by memory controller devices (e.g., server(s), etc.) or software, such as document management systems, Microsoft™ SQL databases, SharePoint™ databases, Oracle™ databases, Sybase™ databases, or other relational or non-relational databases. Memory 230 may include software components that, when executed by processor 210, perform one or more processes consistent with the disclosed embodiments. In some embodiments, memory 230 may a database 260 for storing related data to enable producer device 110 to perform one or more of the processes and functionalities associated with the disclosed embodiments.

Producer device 110 may also be communicatively connected to one or more memory devices (e.g., databases) locally or through a network. The remote memory devices may be configured to store information and may be accessed and/or managed by producer device 110. By way of example, the remote memory devices may be document management systems, Microsoft™ SQL database, SharePoint™ databases, Oracle™ databases, Sybase™ databases, or other relational or non-relational databases. Systems and methods consistent with disclosed embodiments, however, are not limited to separate databases or even to the use of a database.

Producer device 110 may also include one or more I/O devices 220 that may comprise one or more interfaces for receiving signals or input from devices and providing signals or output to one or more devices that allow data to be received and/or transmitted by producer device 110. For example, producer device 110 may include interface components, which may provide interfaces to one or more input devices, such as one or more keyboards, mouse devices, touch screens, track pads, trackballs, scroll wheels, digital cameras, microphones, sensors, and the like, that enable producer device 110 to receive data from one or more users (such as, for example, via user device 102).

In exemplary embodiments of the disclosed technology, producer device 110 may include any number of hardware and/or software applications that are executed to facilitate any of the operations. The one or more I/O interfaces may be utilized to receive or collect data and/or user instructions from a wide variety of input devices. Received data may be processed by one or more computer processors as desired in various implementations of the disclosed technology and/or stored in one or more memory devices.

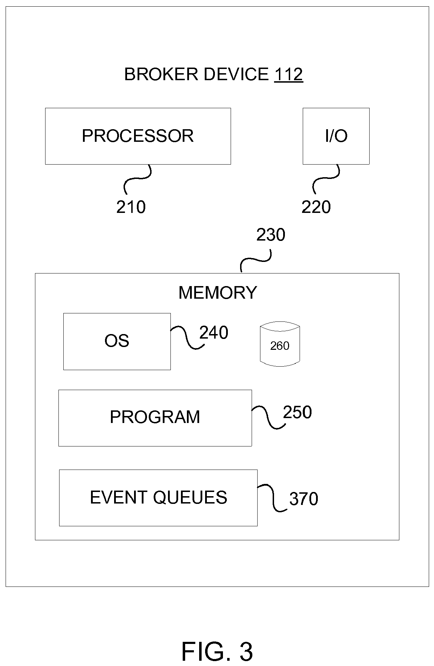

As shown in FIG. 3, broker device 112 may include a processor 210, an input/output ("I/O") device 220, a memory 230 containing an operating system ("OS") 240 a program 250, and a database 260. These elements may include some or all of the features and functionalities described above with respect to the corresponding elements shown in FIG. 2 with respect to the producer device 110. Further, broker device 112 may additionally include event queues 370 that are data structures configured to temporarily store a plurality of events. For example, event queues may be implemented using Apache Zookeeper™ and Apache Kafka™. According to some embodiments, broker device 112 may include a plurality of event queues 370, where each event queue is associated with a unique topic and is configured to temporarily store events that are also associated with the respective topic. Broker device 112 may receive events from producer device 110 or from particular producer components 270 of producer device 110 and place each event in the event queue that is associated with the topic that is associated with the event. According to some embodiments, event queues 370 may be accessed by consumer device 114, which may retrieve events from the event queues 370. In some embodiments, event queues 370 operate on a first-in first-out (FIFO) basis so that events may be removed from the queue in the order they were placed in the queue.

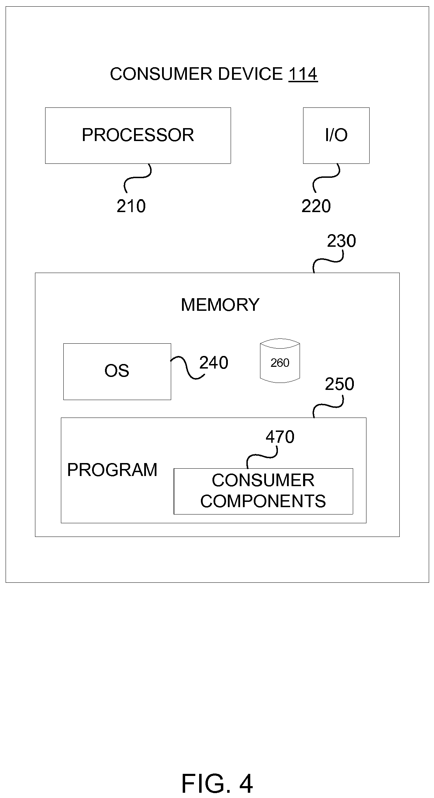

As shown in FIG. 4, consumer device 114 may include a processor 210, an input/output ("I/O") device 220, a memory 230 containing an operating system ("OS") 240 a program 250, and a database 260. These elements may include some or all of the features and functionalities described above with respect to the corresponding elements shown in FIG. 2 with respect to the producer device 110. Further, consumer device 114 may additionally include one or more consumer components 470 that may receive events from event queues 370. A consumer component 470 may be a computing module that is designed to execute one or more particular consumer actions, such as retrieving user account information, emailing consumers regarding the creation, deletion, or modification of a one-time payment, setting up a recurring payment, cancelling a recurring payment, sending a paper letter, send mobile push notification, error handling, sending payment reminders, processing payments, authenticating a user, or creating an agent note that records to the details of a transaction so that a customer service agent may access a record of the transaction. It should be understood that these are merely examples and that a consumer component 470 may be designed to perform any number of different functions relating to the administration of customer accounts or any other such business purpose.

In some embodiments, a consumer component 470 may call an API from, for example API server 122 to assist with the performance of a predetermined consumer action. In some embodiments, consumer component 470 may comprise standalone computer software or an aspect of an integrated software (e.g., including multiple components) in the form of, for example, computer code (e.g., Java code) stored in memory 240 and executed by processor 210 of broker device 112. According to some embodiments, consumer device 114 may include a plurality of consumer components 470, where each consumer component 470 of the plurality is associated with a unique topic that corresponds to a topic associated with a particular event queue 370. Accordingly, in some embodiments, for every event queue 370 in the broker device 112, there may be one corresponding consumer component 470 in the consumer device 114, such that each event queue 370 feeds events into a particular consumer component 470. In some embodiments, there may be multiple consumer components 470 that correspond to a particular event queue 370 such that an event in the event queue may be received and processed by multiple consumer components 470. In this case, multiple consumer components may process a particular event in parallel and may each execute a different predetermined consumer action relating to the event. According to some embodiments, the architecture described herein may have the benefit of being easily scalable, as new event queues 370 and consumer components 470 may be added to broker device 112 and consumer device 114, respectively, to increase the breadth of real-time functionalities offered by the system.

While producer device 110, broker device 112, and consumer device 114 have been described as one form for implementing the techniques described herein, those having ordinary skill in the art will appreciate that other, functionally equivalent techniques may be employed. For example, as known in the art, some or all of the functionality implemented via executable instructions may also be implemented using firmware and/or hardware devices such as application specific integrated circuits (ASICs), programmable logic arrays, state machines, etc. Furthermore, other implementations of the producer device 110, broker device 112, or consumer device 114 may include a greater or lesser number of components than those illustrated.

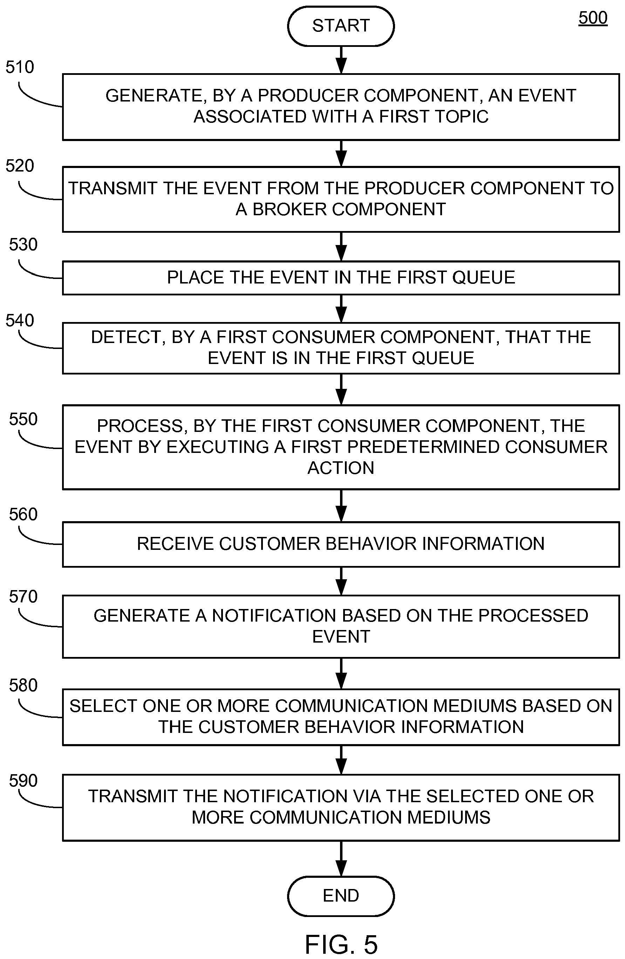

FIG. 5 shows a flowchart of a method 500 for real time message processing using an event driven framework. Method 500 may be performed by some or all of producer device 110, broker device 112, consumer device 114, database 118, and API sever 122.

In block 510, a first producer component 270 may generate a first event. According to some embodiments, the first event may be associated with a topic. According to some embodiments, a topic may be a classification used for grouping like events together, such as for example, retrieve account information, pay bill, transfer funds to an account, email a consumer regarding the creation, deletion or modification of a one-time payment, recurring payment set up, recurring payment cancellation, paper letter, paperless notification, mobile push notification, error handling, payment due reminder, payment processing, authentication or any other such topic related to the management of customer accounts. In some embodiments, a first producer component may be one of a plurality of producer components 270 associated with producer device 110. In some embodiments a producer device 110 may only include a single producer component 270. According to some embodiments an event may be electronic data that represents an event, request, or a piece of information, such as, for example a request to cancel automatic bill payment. In some embodiments, one or more events may be generated by one or more producer components 270 executing a predetermined batching process, such as, for example, executing a batching process at a predetermined time to generate a batch of user accounts with payment deadlines that are one week away. According to some embodiments, a producer component 270 may generate a plurality of events in response to the batching process, where, for example, each event in the plurality of events corresponds to a particular account in the batch. In some embodiments, one or more events may also be generated by consumer component 470 for placement in event queues 370.

In block 520, the first producer component 270 may transmit the first event to a broker device 112. The broker device 112 may maintain a plurality of event queues 370. According to some embodiments, each of the plurality of event queues 370 may be a data structure that is configured to temporarily store a plurality of events. According to some embodiments, each event queue 370 may be associated with a corresponding topic. In some embodiments, each event queue 370 is associated with a unique topic. For example, in some embodiments a first event queue 370 may be associated with a first topic and a second event queue 370 may be associated with a second topic.

In block 530, the broker device may place the first event in the first event queue. In block 540, a first consumer component 470 associated with the first topic may detect that the first event is in the first event queue. According to some embodiments, consumer components 470 may continuously or intermittently monitor event queues 370 to detect events. In some embodiments, each consumer component 470 may monitor an event queue 370 by continuously or intermittently pinging the event queue 370 of the broker device 112 and maintaining an offset increment to determine the number of events in the queue. For example, if after initiating a monitoring communication with the event queue 360, the consumer component 470 determines it has an offset increment of three, than that may indicate that the event queue 370 is storing three events that may be accessed and retrieved by the consumer component 370. According to some embodiments, an event may remain in an event queue 370 for a predetermined amount of time before being deleted by broker device 112. Accordingly, in some embodiments, multiple consumer components 470 may be capable of receiving the same event before the event is deleted from the event queue 370.

According to some embodiments, each consumer component 470 of consumer device 114 may be associated with a unique topic that corresponds to an event queue 370 associated with the same topic. In other words, in some embodiments, for each event queue 370 of the plurality of event queues 370 may be associated with a unique topic and may also be associated with a unique consumer component 470. In some embodiments, each consumer component 470 may be configured to only monitor an event queue 370 associated with the same topic as the consumer component 470 such that there is a one to one correlation between the plurality of event queues 370 and a plurality of consumer components 470. Thus, in some embodiments, each event queue 370 may feed events into a particular consumer component 470. According to some embodiments, a particular consumer component 470 may monitor more than one event queue 370 such that it may receive events from multiple event queues 370. Thus, in some embodiments, multiple consumer components 470 may be capable of receiving the same event from a single event queue. This is advantageous because some events may give rise to multiple consumer actions that may need to be performed by different consumer components 470. In some embodiments, multiple consumer components 470 may process the same event in parallel. According to some embodiments, different consumer components 470 may process an event at different speeds. Accordingly, the parallel processing of events enabled by this architecture may enable greater throughput and speed than if each event giving rise to multiple consumer actions were made to be processed serially through multiple consumer components 470.

In block 550, the first consumer component 470 may process the first event by executing a first predetermined action. In some embodiments, each consumer component 470 may be configured to execute one or more of a set of predetermined consumer actions. For example, in some embodiments, each consumer component 470 may be configured to execute a different consumer action. In some embodiments, each consumer component 470 may be configured to execute one or more of a different set of consumer actions from the other consumer components 470. Consumer actions that may be executed by a consumer component 470 in response to processing an event may include, for example, retrieving user account information, generating an email for the creation, deletion, or modification of a one-time payment, setting up a recurring payment, cancelling a recurring payment, issuing a paper letter, initiating a paperless notification, initiating a mobile push notification, error handling, issuing a payment due reminder, processing a payment, authenticating a user, or any other such action as may be required in the course of administering customer accounts or other business functionalities.

In block 560, the system 100 may receive customer behavior information. In some embodiments, the customer behavior information may be received by a consumer component 470. In some embodiments, the customer behavior information may be received by an API server 122. According to some embodiments the customer behavior information may be received from a database 118. In some embodiments, customer behavior information may be information indicating how a user prefers to receive and digest information. For example, customer behavior information may include information about whether a customer has opened an email or read a text message, how long the customer viewed the message, whether the customer responded or took some related action after viewing the message (e.g., clicking on a link), electronic tracking of paper letters and whether a letter has been received and/or opened, or any other such information that may provide an insight into a customer's preferred means of receiving communications. As those of skill in the art will appreciate, such customer behavior may be electronically recorded and stored in a database 118.

In block 570, first consumer component 470 may generate a notification based on the processed first event. For example, after processing an event to cancel an automatic bill payment, first consumer component 470 may generate a notification indicating that the automatic bill payment has been cancelled.

In block 580, first consumer component 470 may select one or more communication mediums based on the customer behavior information. In some embodiments, first consumer component 470 may utilize a machine learning algorithm to analyze the customer behavior information to determine what the optimal communication channel for a particular customer is. For example, customer component 470 may determine that a particular customer is more receptive to receiving text messages than emails and thus may select text messaging as the communication medium. Communication mediums that may be utilized by the system include SMS, email, chat applications, mobile application interfaces, website interfaces, and written letters. Although the receipt of the customer behavior information and selection of one or more communication channels is described with respect to a consumer component 470, it should be understood that in other embodiments other devices or components, such as, for example, API server 122 may carry out these functions.

In block 590, the system 100 may transmit the notification via the selected one or more communication mediums. In some embodiments, the system 100 may transmit the notification to, for example, user device 102 via text message, email, a chat function, an instant message, or in a physical letter mailed to an address associated with the customer.

As used in this application, the terms "component," "module," "system," "server," "processor," "memory," and the like are intended to include one or more computer-related units, such as but not limited to hardware, firmware, a combination of hardware and software, software, or software in execution. For example, a component may be, but is not limited to being, a process running on a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Certain embodiments and implementations of the disclosed technology are described above with reference to block and flow diagrams of systems and methods and/or computer program products according to example embodiments or implementations of the disclosed technology. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, may be repeated, or may not necessarily need to be performed at all, according to some embodiments or implementations of the disclosed technology.

These computer-executable program instructions may be loaded onto a general-purpose computer, a special-purpose computer, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks.

As an example, embodiments or implementations of the disclosed technology may provide for a computer program product, including a computer-usable medium having a computer-readable program code or program instructions embodied therein, said computer-readable program code adapted to be executed to implement one or more functions specified in the flow diagram block or blocks. Likewise, the computer program instructions may be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions, and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special-purpose hardware and computer instructions.

Certain implementations of the disclosed technology are described above with reference to user devices may include mobile computing devices. Those skilled in the art recognize that there are several categories of mobile devices, generally known as portable computing devices that can run on batteries but are not usually classified as laptops. For example, mobile devices can include, but are not limited to portable computers, tablet PCs, internet tablets, PDAs, ultra mobile PCs (UMPCs), wearable devices, and smart phones. Additionally, implementations of the disclosed technology can be utilized with internet of things (IoT) devices, smart televisions and media devices, appliances, automobiles, toys, and voice command devices, along with peripherals that interface with these devices.

In this description, numerous specific details have been set forth. It is to be understood, however, that implementations of the disclosed technology may be practiced without these specific details. In other instances, well-known methods, structures and techniques have not been shown in detail in order not to obscure an understanding of this description. References to "one embodiment," "an embodiment," "some embodiments," "example embodiment," "various embodiments," "one implementation," "an implementation," "example implementation," "various implementations," "some implementations," etc., indicate that the implementation(s) of the disclosed technology so described may include a particular feature, structure, or characteristic, but not every implementation necessarily includes the particular feature, structure, or characteristic. Further, repeated use of the phrase "in one implementation" does not necessarily refer to the same implementation, although it may.

Throughout the specification and the claims, the following terms take at least the meanings explicitly associated herein, unless the context clearly dictates otherwise. The term "connected" means that one function, feature, structure, or characteristic is directly joined to or in communication with another function, feature, structure, or characteristic. The term "coupled" means that one function, feature, structure, or characteristic is directly or indirectly joined to or in communication with another function, feature, structure, or characteristic. The term "or" is intended to mean an inclusive "or." Further, the terms "a," "an," and "the" are intended to mean one or more unless specified otherwise or clear from the context to be directed to a singular form. By "comprising" or "containing" or "including" is meant that at least the named element, or method step is present in article or method, but does not exclude the presence of other elements or method steps, even if the other such elements or method steps have the same function as what is named.

While certain embodiments of this disclosure have been described in connection with what is presently considered to be the most practical and various embodiments, it is to be understood that this disclosure is not to be limited to the disclosed embodiments, but on the contrary, is intended to cover various modifications and equivalent arrangements included within the scope of the appended claims. Although specific terms are employed herein, they are used in a generic and descriptive sense only and not for purposes of limitation.

This written description uses examples to disclose certain embodiments of the technology and also to enable any person skilled in the art to practice certain embodiments of this technology, including making and using any apparatuses or systems and performing any incorporated methods. The patentable scope of certain embodiments of the technology is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

### Exemplary Use Cases

The following exemplary use case describes one example of a typical user flow pattern. It is intended solely for explanatory purposes and not in limitation. From time to time, a business may need to send out a mass communication a group of customers in response to some event. For example, a major weather event in a particular region, such as a tornado, may give rise to the need to inform an affected group of customers that the business will, for example, not charge them late fees if they miss a payment deadline due to the weather event. However, in such an instance it may be necessary to send each customer an individualized communication. Accordingly, in response to tornado, the system (e.g., via producer component 270) may create an event that may represent an instruction to temporarily suspend late fees for the affected customers. The system (e.g., via broker device 112) may place the event in an event queue that is associated with the topic of suspending late fees. The event queue may have a plurality of such events that may be processed by the system (e.g., via consumer component 470) in a first-in first-out (FIFO) manner, such that events may be processed in real time as they occur. The system may process the event (e.g., via consumer component 470) by accessing a particular affected customer's account and suspending late fees, and then the system may generate (e.g., via API server 122) a notification to send to customer informing the customer that late fees have been suspended. The system (e.g., via consumer component 470) may use machine learning techniques to analyze customer behavior data (e.g., whether a customer has opened an email, how long a customer has viewed an email, etc.) to determine the best way of delivering the notification to the customer and may decide for example, to send the notification via a text message as opposed to an email or a letter, thereby optimizing the chance the that customer will view the message.

Another exemplary use case would be if a customer initiates an interaction with a company to request some information or take some action. For example, a customer may send a message to the company requesting the company cancel automatic bill payments. The system (e.g., via producer component 270 may generate an event for this request and place it in the appropriate event queue 370 (e.g., via broker device 112). The system may then process the event (e.g., via first consumer component 470) and modify the customer's account to change the account settings to cancel automatic bill payment (e.g., via API server 124). In some cases, the system may simultaneously take an additional action relating to the same event (e.g., via second consumer component 470), such as, for example, modifying the customer's account to change settings relating to future automatic notifications relating to automatic bill payments (e.g., via API server 124). As described above, the system may then generate a notification (e.g., via API server 124) and may then analyze customer behavior data (e.g., via consumer component 470) to determine the best communication medium to deliver the notification to the customer before transmitting the notification (e.g., via API server 124).

Certain implementations of the disclosed technology are described above with reference to block and flow diagrams of systems and methods and/or computer program products according to example implementations of the disclosed technology. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, may be repeated, or may not necessarily need to be performed at all, according to some implementations of the disclosed technology.

These computer-executable program instructions may be loaded onto a general-purpose computer, a special-purpose computer, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, implementations of the disclosed technology may provide for a computer program product, including a computer-usable medium having a computer-readable program code or program instructions embodied therein, said computer-readable program code adapted to be executed to implement one or more functions specified in the flow diagram block or blocks. Likewise, the computer program instructions may be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

As used herein, unless otherwise specified the use of the ordinal adjectives "first," "second," "third," etc., to describe a common object, merely indicate that different instances of like objects are being referred to, and are not intended to imply that the objects so described must be in a given sequence, either temporally, spatially, in ranking, or in any other manner.

## Claims

1. A system for providing real time message processing using event driven framework, comprising:
one or more processors; and
a memory in communication with the one or more processors and storing instructions that, when executed by the one or more processors, are configured to cause the system to:
generate, by a first producer component, a first event, the first event being associated with a first topic;
transmit, by the first producer component and to a broker device, the first event, wherein the broker device maintains a plurality of event queues, each event queue being capable of temporarily storing a plurality of events, the plurality of event queues including at least a first event queue associated with the first topic;
place, by the broker device, the first event in the first event queue;
detect, by a first consumer component associated with the first topic, that the first event is in the first event queue;
process, by the first consumer component, the first event by executing a first predetermined consumer action;
receive, at the first consumer component, customer behavior information;
generate, by the first consumer component, a notification based on the processed first event;
select, by the first consumer component, one or more communication mediums based on the customer behavior information; and
transmit the notification via the selected one or more communication mediums.

2. The system of claim 1, wherein the first producer component is comprises an API.

3. The system of claim 1 or 2, wherein the first event electronic data that represents an event or a request.

4. The system of anyone of the preceding claims, wherein each event queue of the plurality of event queues is associated with a unique topic.

5. The system of anyone of the preceding claims, wherein the first predetermined consumer action is one of:
retrieve customer account information;
set up recurring payment;
cancel recurring payment;
email customer;
send paper letter;
initiate paperless notification;
payment due reminder;
process payment; and
authenticate user.

6. The system of anyone of the preceding claims, wherein the customer behavior information comprises one or more of:
information indicating whether a customer has opened an email;
information indicating whether a user has read a text message;
information indicating how long a customer viewed a particular message; and
information indicating whether the customer responded to a message or took action after viewing the message.

7. The system of anyone of the preceding claims, wherein the selection of one or more communication mediums based on the customer behavior information is performed using machine learning techniques to determine an optimized customer engagement channel.

8. The system of anyone of the preceding claims, further including instructions that cause the system to:
detect, by a second consumer component, that the first event entered the first event queue; and
process, by the second consumer component, the first event by executing a second predetermined consumer action, wherein the processing speeds of the first consumer component and the second consumer component are different, wherein the processing by the first consumer component and the second consumer component are performed in parallel.

9. The system of anyone of the preceding claims, further including instructions that cause the system to:
generate, by a second producer component, a second event, the second event being associated with a second topic;
transmit, by the second producer component and to the broker device, the second event;
place, by the broker device, the event in a second queue associated with the second topic;
detect, by a second consumer component, that the second event entered the second event queue; and
process, by the second consumer component, the second event by executing a second predetermined consumer action.

10. A method of providing real time message processing using event driven framework, comprising:
generating, by a first producer component, a first event, the first event being associated with a first topic;
transmitting, by the first producer component and to a broker device, the first event, wherein the broker device maintains a plurality of event queues, each event queue being capable of temporarily storing a plurality of events, the plurality of event queues including at least a first event queue associated with the first topic;
placing, by the broker device, the first event in the first event queue;
detecting, by a first consumer component associated with the first topic, that the first event is in the first event queue;
processing, by the first consumer component, the first event by executing a first predetermined consumer action;
receiving, at the first consumer component, customer behavior information;
generating, by the first consumer component, a notification based on the processed first event;
selecting, by the first consumer component, one or more communication mediums based on the customer behavior information; and
transmitting the notification via the selected one or more communication mediums.

11. The method of claim 10, wherein each event queue of the plurality of event queues is associated with a unique topic.

12. The method of claim 10 or 11, further comprising:
detecting, by a second consumer component, that the first event entered the first event queue; and
processing, by the second consumer component, the first event by executing a second predetermined consumer action, wherein the processing speeds of the first consumer component and the second consumer component are different, wherein the processing by the first consumer component and the second consumer component are performed in parallel.

13. A non-transitory computer-readable medium storing instructions that, when executed by one or more processors, cause a system to:
generate, by a first producer component, a first event, the first event being associated with a first topic;
transmit, by the first producer component and to a broker device, the first event, wherein the broker device maintains a plurality of event queues, each event queue being capable of temporarily storing a plurality of events, the plurality of event queues including at least a first event queue associated with the first topic;
place, by the broker device, the first event in the first event queue;
detect, by a first consumer component associated with the first topic, that the first event is in the first event queue;
process, by the first consumer component, the first event by executing a first predetermined consumer action;
receive, at the first consumer component, customer behavior information;
generate, by the first consumer component, a notification based on the processed first event;
select, by the first consumer component, one or more communication mediums based on the customer behavior information; and
transmit the notification via the selected one or more communication mediums.

14. The non-transitory computer-readable medium of claim 13, wherein each event queue of the plurality of event queues is associated with a unique topic.

15. The non-transitory computer-readable medium of claim 13 or 14, storing further instructions that, when executed by one or more processors, cause the system to:
detect, by a second consumer component, that the first event entered the first event queue; and
process, by the second consumer component, the first event by executing a second predetermined consumer action, wherein the processing speeds of the first consumer component and the second consumer component are different.
